# EUROPEAN PATENT APPLICATION

(11) **EP 3 513 940 A1**
(43) Date of publication of application: **24.07.2019**
(21) Application number: 19150690.6
(22) Date of filing: 08.01.2019
(51) Int. Cl.: B29C 33/02, B29C 43/52, B29C 35/08, B29C 33/40, B29C 65/32

(54) **MOLDING DIE, MOLDING APPARATUS, MOLDING METHOD, AND MANUFACTURING METHOD FOR RESIN PRODUCT**

(30) Priority: 22.01.2018 JP 2018008303
(71) Applicant: TOYOTA JIDOSHA KABUSHIKI KAISHA, Toyota-shi, Aichi-ken, 471-8571 (JP)
(72) Inventor: IWANO, Yoshihiro, TOYOTA-SHI, AICHI-KEN, 471-8571 (JP)
(74) Representative: Cabinet Beau de Loménie

(57) **Abstract**

A molding die (10) includes a resistance heating element (12) included in a surface portion of the molding die (10) and configured to heat a molding surface (10s) by generating heat, and a heat insulator (14) provided further inside the molding die (10) than the resistance heating element (12) and configured to restrain the heat of the surface portion of the molding die (10) from being transmitted to an inside of the molding die (10). The surface portion of the molding die (10) includes the molding surface (10s).

## Description

### BACKGROUND OF THE INVENTION

### 1. Field of the Invention

The invention relates to a molding die, a molding apparatus, a molding method, and a manufacturing method for a resin product.

### 2. Description of Related Art

In a molding apparatus disclosed in Japanese Unexamined Patent Application Publication No. 2006-256078 (JP 2006-256078 A), a heater is provided inside a die (upper die and lower die) made of a metal such as steel for a machine structure, alloy tool steel, and stainless steel. The temperature of the die is raised by the heater, and a resin substrate (molding material) such as a resin sheet is press-molded to mold a resin body (molded article).

### SUMMARY OF THE INVENTION

With the above technique, there is room for improvement concerning the amount of energy needed to raise the temperature of the die and the amount of energy needed to maintain the die at a high temperature. In addition, it takes time to cool the die, resulting in a longer molding time.

The invention provides a molding die, a molding apparatus, a molding method, and a manufacturing method for a resin product, which can reduce the amount of energy needed for molding and can shorten the molding time.

### Molding Die

A first aspect of the invention relates to a molding die. The molding die includes a resistance heating element and a heat insulator. The resistance heating element is included in a surface portion of the molding die and is configured to heat a molding surface by generating heat. The surface portion of the molding die includes the molding surface. The heat insulator is provided further inside the molding die than the resistance heating element and is configured to restrain the heat of the surface portion of the molding die from being transmitted to the inside of the molding die.

In the molding die, the resistance heating element is included in the surface portion of the molding die. Therefore, the resistance heating element can generate heat by passing an electric current through the resistance heating element by induction heating or the like. When the resistance heating element generates heat, the surface portion of the molding die provided with the resistance heating element is heated, and as a result, the molding surface is heated. Furthermore, the heat insulator is provided further inside the molding die than the resistance heating element. Accordingly, the heat of the surface portion of the molding die heated by the heat generation of the resistance heating element is restrained from being transmitted to the inside of the molding die. Therefore, it is difficult for the heat to escape to the inside of the molding die, and it is possible to efficiently heat the molding surface that comes into contact with a molding material. Since the molding die heats only the vicinity of the surface portion of the molding die, the amount of energy needed to raise the temperature of the die or the amount of energy needed to maintain the die at a high temperature can be reduced. In addition, a cooling speed of the die is fast.

The surface portion of the molding die means a portion where the temperature of the surface of the molding die is immediately raised by providing the resistance heating element on the surface portion of the molding die. Specifically, in the die, the surface portion of the molding die means the surface (molding surface) of the molding die or a portion near the surface of the molding die.

In the molding die according to the first aspect of the invention, the resistance heating element may have a mesh shape.

In the molding die, the resistance heating element has a mesh shape. Therefore, the material of the resistance heating element can be saved compared with a form in which the resistance heating element has a planar shape (that is, a structure not having a mesh-shaped hole). The heating temperature of the molding surface and the like can be adjusted by adjusting a ratio of the area of the resistance heating element to the entire area of the molding surface. Since the resistance heating element is mesh-shaped, it is easy to perform induction heating even when the resistance heating element does not have a planar shape.

In the molding die according to the first aspect of the invention, the resistance heating element may be embedded in the molding die.

In the molding die, the resistance heating element is embedded in the molding die. That is, the resistance heating element is not exposed on the surface of the molding die. Therefore, a trace of the resistance heating element does not remain on a resin body.

In the molding die according to the first aspect of the invention, the surface portion of the molding die may include a resin layer, and the resistance heating element may be embedded in the resin layer.

In the molding die, the surface portion of the molding die includes the resin layer, and the resistance heating element is embedded in the resin layer. Therefore, it is easy to manufacture a die in which the resistance heating element is not exposed on the surface (molding surface) of the molding die.

In the molding die according to the aspect of the invention, a die main body made of a metal may be disposed further inside the molding die than the resin layer, and the heat insulator may be a sheet-shaped or plate-shaped heat insulating material interposed between the resin layer and the die main body.

In the molding die, the die main body made of a metal is disposed further inside the molding die than the resin layer. The sheet-shaped or plate-shaped heat insulating material is interposed between the resin layer of the surface portion of the molding die and the die main body, and the sheet-shaped or plate-shaped heat insulating material functions as a heat insulator which restrains the heat of the surface portion of the molding die from being transmitted to the inside of the molding die. Therefore, the molding die can be easily manufactured based on the die main body made of a metal.

In the molding die according to the first aspect of the invention, the resistance heating element may be disposed between the molding surface and the heat insulator.

In the molding die according to the first aspect of the invention, the resistance heating element may be provided to be exposed on the surface portion of the molding die.

In the molding die according to the first aspect of the invention, the heat insulator may be disposed along the resistance heating element. That is, the heat insulator is disposed parallel to the resistance heating element and at a position corresponding to the resistance heating element.

### Molding Apparatus

A second aspect of the invention relates to a molding apparatus. The molding apparatus includes the molding die according to the first aspect and a heating part. The heating part is configured to cause the resistance heating element to generate heat by generating an electric current in the resistance heating element to heat the molding surface.

In the molding die of the molding apparatus, the resistance heating element is included in the surface portion of the molding die. In addition, the molding apparatus includes the heating part that causes the resistance heating element to generate heat by generating an electric current in the resistance heating element to heat the molding surface. Therefore, the resistance heating element can generate the heat by passing the electric current through the resistance heating element by using the heating part. When the resistance heating element generates heat, the surface portion of the molding die provided with the resistance heating element is heated, and as a result, the molding surface is heated. Furthermore, the heat insulator is provided further inside the molding die than the resistance heating element. Accordingly, the heat of the surface portion of the molding die heated by the heat generation of the resistance heating element is restrained from being transmitted to the inside of the molding die. Therefore, it is difficult for the heat to escape to the inside of the molding die, and it is possible to efficiently heat the molding surface that comes into contact with the molding material. Since the molding die heats only the vicinity of the surface portion of the molding die, the amount of energy needed to raise the temperature of the die or the amount of energy needed to maintain the die at a high temperature can be reduced. In addition, the cooling speed of the die is fast.

In the molding apparatus according to the second aspect of the invention, the heating part may be a coil that generates an electric current by electromagnetic induction.

In the molding apparatus, the heating part is a coil that generates an electric current by electromagnetic induction. Therefore, the resistance heating element can generate heat without using a voltage generator directly connected to the resistance heating element. In a state where the resin substrate containing a carbon fiber is disposed on the molding surface, it is possible to indirectly heat the resin substrate through the molding surface by the electromagnetic induction of the coil and to directly heat the resin substrate.

In the molding apparatus according to the second aspect of the invention, the heating part may be a voltage generator directly connected to the resistance heating element.

In the molding apparatus, the heating part is a voltage generator directly connected to the resistance heating element. Therefore, even in a state where the die is closed, the resistance heating element can easily generate heat.

### Molding Method

A third aspect of the invention relates to a molding method for molding a resin body from a resin substrate by using the molding die according to the first aspect. The molding method includes heating the molding surface by generating an electric current in the resistance heating element, and pressurizing the resin substrate on the molding surface by closing the molding die.

In the molding die of the molding method, the resistance heating element is provided on the surface portion of the molding die. The resistance heating element can generate heat by passing an electric current through the resistance heating element. When the resistance heating element generates heat, the surface portion of the molding die provided with the resistance heating element is heated, and as a result, the molding surface is heated. Furthermore, the heat insulator is provided further inside the molding die than the resistance heating element. Accordingly, the heat of the surface portion of the molding die heated by the heat generation of the resistance heating element is restrained from being transmitted to the inside of the molding die. Therefore, it is possible to immediately heat the molding surface that comes into contact with the molding material. Since the molding die heats only the vicinity of the surface portion of the molding die, the amount of energy needed to raise the temperature of the die or the amount of energy needed to maintain the die at a high temperature can be reduced. In addition, the cooling speed of the die is fast.

In the molding method according to the third aspect of the invention, the resin substrate may be a substrate containing a carbon fiber. The molding method may include simultaneously heating the molding surface and the resin substrate by induction heating in a state where the resin substrate is disposed on the molding surface.

In the molding method, the resin substrate is a substrate containing a carbon fiber. The molding method includes simultaneously heating the molding surface and the resin substrate by induction heating in a state where the resin substrate is disposed on the molding surface of the die. Therefore, the heating efficiency of the resin substrate is good.

### Manufacturing Method for Resin Product

A fourth aspect of the invention relates to a manufacturing method for a resin product. The manufacturing method includes molding a resin body from a resin substrate by using the molding die according to the first aspect, and welding the resin body and another resin body by using the same die as the molding die.

In the manufacturing method, the molded resin body and the other resin body are welded by using the same die as the molding die which molds the resin body. Therefore, it is possible to utilize, as a die for welding, the die used for molding the resin body as it is, and to reduce facility investment. It should be noted that "the same die as the molding die" is not limited to the die itself used for molding, and also includes a die of the same design.

As described above, according to the aspects of the invention, it is possible to reduce the amount of energy needed for molding, and to shorten the molding time.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a cross-sectional view showing an overall configuration of a molding apparatus of a first embodiment;
FIG. 2A is a cross-sectional view showing a state in which a resin body is molded from a resin substrate by using a molding die;
FIG. 2B is a cross-sectional view showing a state in which the resin body is molded from the resin substrate by using the molding die, and since leader lines are complicated, illustration of the numerals is simplified;
FIG. 2C is a cross-sectional view showing a state in which the resin body is molded from the resin substrate by using the molding die;
FIG. 3 is a cross-sectional view showing a state in which induction heating is performed by using a coil in a state where the resin substrate is disposed on a lower die;
FIG. 4 is a plan view showing a shape of a mesh-shaped resistance heating element;
FIG. 5 is a cross-sectional view showing an overall configuration of a molding apparatus of a second embodiment;
FIG. 6 is a cross-sectional view showing an overall configuration of a molding apparatus according to a third embodiment; and
FIG. 7 shows a modification example of the molding apparatus of the first embodiment, and is a view showing a form in which a heating part is a voltage generator directly connected to a resistance heating element.

### DETAILED DESCRIPTION OF EMBODIMENTS

### Molding Apparatus of First Embodiment

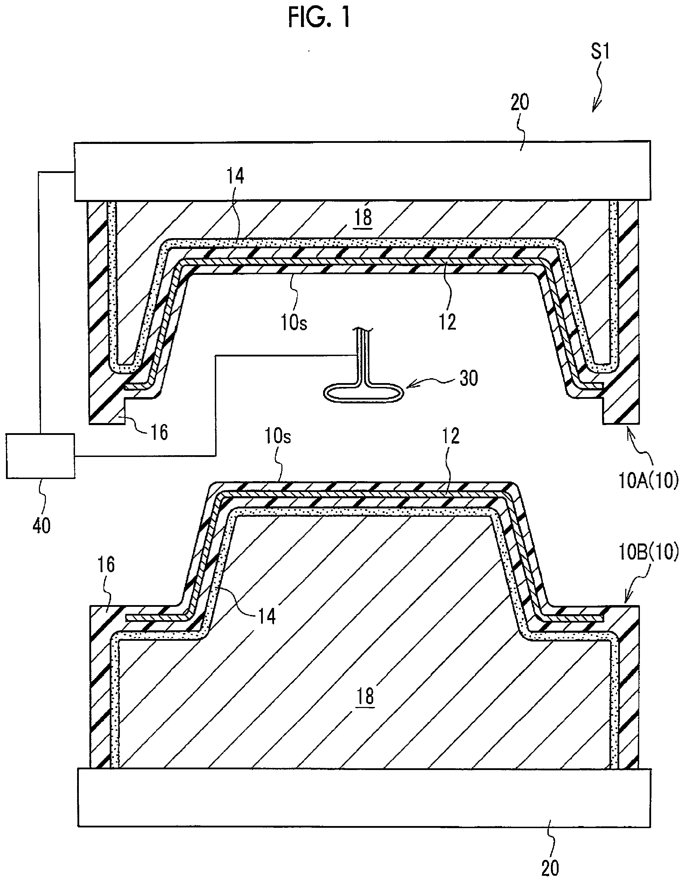

Hereinafter, a molding apparatus S1 of a first embodiment will be described with reference to FIGS. 1 to 4.

### Die 10 (Molding Die)

### The molding apparatus S1 includes a die 10.

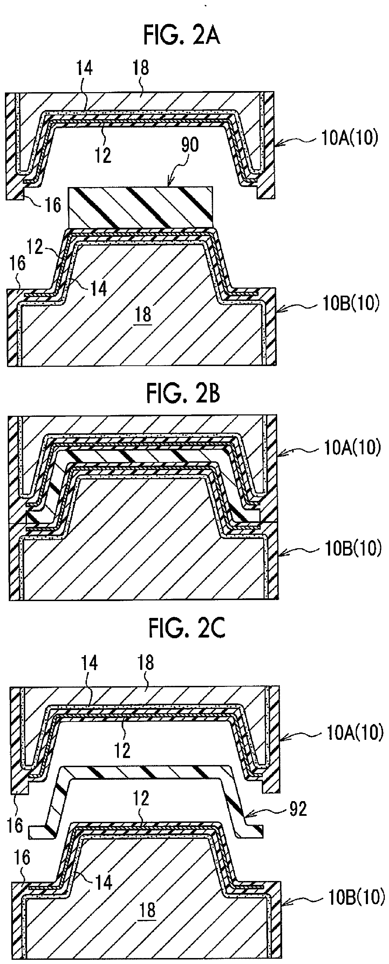

The die 10 is composed of an upper die 10A and a lower die 10B. The upper die 10A and the lower die 10B are attached to a press device 20 as a "pressurizing device". The upper die 10A and the lower die 10B are disposed to face each other. The press device 20 moves the upper die 10A against the lower die 10B, a resin substrate 90 such as a resin sheet (see FIG. 2A) is sandwiched between molding surfaces 10s of the upper die 10A and the lower die 10B (see FIG. 2B), and a resin body 92 (see FIG. 2C) is molded (so-called stamping molded). In the embodiment, each of the upper die 10A and the lower die 10B corresponds to a "molding die".

The structure of the lower die 10B will be described. The structure of the upper die 10A is similar to that of the lower die 10B. Therefore, the same reference numerals are given to the respective parts of the upper die 10A as those of the lower die 10B, and detailed descriptions thereof will be omitted.

The lower die 10B has a die main body 18.

The die main body 18 is made of a metal material such as steel. The die main body 18 constitutes a portion other than a die surface portion (near the molding surface 10s) of the lower die 10B, that is, the inside of the die occupying most of the lower die 10B.

A heat insulating material 14 is disposed on the surface of the die main body 18 (the surface on the molding surface 10s side). The heat insulating material 14 is a sheet-shaped or plate-shaped heat insulating material and covers the entire surface of the die main body 18. As the heat insulating material 14, bakelite, glass wool, thermo shield tape, or the like can be used.

A resin layer 16 is formed on the surface side of the heat insulating material 14. The surface on the front side of the resin layer 16 is the molding surface 10s that comes into contact with the resin substrate 90 or the resin body 92. Thereby, the heat insulating material 14 is interposed between the resin layer 16 and the die main body 18.

The resin layer 16 is made of a thermosetting resin. Further, the resin layer 16 may be made of a fiber reinforced resin containing a carbon fiber or a glass fiber, and desirably, may be made of a material having low electrical conductivity (for example, a material not containing a carbon fiber).

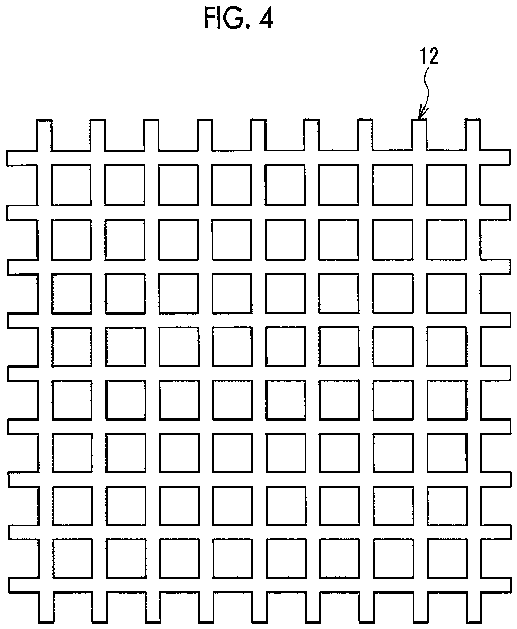

A resistance heating element 12 is provided inside the resin layer 16. As shown in FIG. 4, the resistance heating element 12 is a mesh-shaped metal body. The entire resistance heating element 12 is provided so as to be embedded in the resin layer 16 and is not exposed on the molding surface 10s (die surface). The resistance heating element 12 is provided corresponding to the entire area of the molding surface 10s, that is, the entire area of the portion that comes into contact with the resin body 92. As the resistance heating element 12 generates heat by induction heating, the entire area of the molding surface 10s is heated.

### Coil 30 (Heat Generating Part)

The molding apparatus S1 also includes a coil 30. The coil 30 functions as a "heating part" that causes the resistance heating element 12 to generate heat to heat the molding surface 10s. The coil 30 is controlled by a control device 40 configured to control movement (for example, along the molding surface 10s), the amount of an electric current, or the like, and causes the resistance heating element 12 to generate heat by induction heating.

### Molding Method

An example of a molding method using molding apparatus S1 will be described.

The molding method of the first embodiment is a method for molding the resin body 92 from the resin substrate 90 which is a resin sheet. The molding method of the first embodiment includes a substrate heating step of heating the resin substrate 90, a die heating step of heating the die 10, and a pressurizing step of pressurizing the resin substrate 90 by closing the die 10.

The resin substrate 90 is a sheet-shaped substrate containing a carbon fiber (that is, a carbon fiber reinforced plastic (CFRP) sheet). Specifically, the resin substrate 90 is obtained by laminating prepregs obtained by impregnating a carbon fiber with a thermoplastic resin.

As the substrate heating step, the resin substrate 90 is preheated with a heating furnace (not shown) such as a near infrared heater. By the preheating, the resin substrate 90 is softened to be a moldable state. Then, the softened resin substrate 90 is taken out from the heating furnace and the resin substrate 90 is set to the die 10.

As the die heating step, in a state where the die 10 is open before the resin substrate 90 is set, the die 10 (specifically, the molding surfaces 10s of the upper die 10A and the lower die 10B) is heated. Specifically, in a state where the die 10 is open, the movement and the amount of the electric current of the coil 30 are controlled by the control device 40, and the molding surface 10s of the lower die 10B and the molding surface 10s of the upper die 10A are heated.

As the pressurizing step, the resin substrate 90 softened to a moldable state is disposed on the molding surface 10s of the lower die 10B (see FIG. 2A), and the upper die 10A is lowered to close the die 10 (see FIG. 2B). The step is on standby until the resin substrate 90 is cooled by holding the die 10 for a certain period of time in a state of being closed, and then stabilizes the shape of the resin body 92 (molded article, see FIG. 2C).

### Operational Effect

An operational effect of the embodiment will be described.

In the first embodiment, the resistance heating element 12 is included in the surface portion of the molding die (near the molding surface 10s). Therefore, the resistance heating element 12 can generate heat by passing an electric current through the resistance heating element 12 by electromagnetic induction or the like. When the resistance heating element 12 generates heat, the surface portion of the molding die provided with the resistance heating element 12 is heated, and as a result, the molding surface 10s is heated. Furthermore, the heat insulating material 14 is provided further inside the molding die than the resistance heating element 12. Accordingly, the heat of the surface portion of the molding die heated by the heat generation of the resistance heating element 12 is restrained from being transmitted to the inside of the molding die. Therefore, it is difficult for the heat to escape to the inside of the molding die, and it is possible to efficiently heat the molding surface 10s that comes into contact with the resin substrate 90. In this way, since only the vicinity of the surface portion of the molding die is heated, the amount of energy needed to raise the temperature of the die 10 or the amount of energy needed to maintain the die 10 at a high temperature can be reduced. In addition, a cooling speed of the die is fast.

In the first embodiment, the resistance heating element 12 has a mesh shape. Therefore, the material of the resistance heating element 12 can be saved compared with a form in which the resistance heating element 12 has a planar shape. In addition, by changing the specific structure of the resistance heating element 12 having the mesh shape, it is possible to adjust the heating temperature or the like of the molding surface 10s. Further, since the resistance heating element 12 is mesh-shaped, it is easy to perform induction heating even when the resistance heating element 12 does not have a planar shape.

In the first embodiment, the entire resistance heating element 12 is embedded in the die 10. That is, the resistance heating element 12 is not exposed on the surface of the molding die (the molding surface 10s). Therefore, the trace of the resistance heating element 12 does not remain on the resin body 92 (molded article).

In the first embodiment, the surface portion of the molding die includes the resin layer 16, and the resistance heating element 12 is embedded in the resin layer 16. Therefore, it is easy to manufacture a die in which the resistance heating element 12 is not exposed.

In the first embodiment, the die main body 18 made of a metal is disposed further inside the molding die than the resin layer 16. The sheet-shaped or plate-shaped heat insulating material 14 is interposed between the resin layer 16 of the surface portion of the molding die and the die main body 18, and the sheet-shaped or plate-shaped heat insulating material 14 functions as a "heat insulator" which restrains the heat of the surface portion of the molding die from being transmitted to the inside of the molding die. Therefore, the die 10 according to the aspect of the present invention can be easily manufactured based on the die main body 18 made of a metal.

### Modification Example of First Embodiment

The die 10 of the first embodiment can also be used for welding the molded resin body 92 to another resin body (not shown). That is, the upper die 10A or the lower die 10B used for molding the resin body 92 may weld the resin body 92 to the other resin body. The welding may be performed by using another die of the same design as the die 10 instead of the die 10 itself used for molding. Further, the welding may be performed by using another die in which a difference from the die 10 used for molding is only a disposed position of the resistance heating element 12. In this case, it is desirable to use a die in which the resistance heating element 12 is disposed corresponding to only the welding portion.

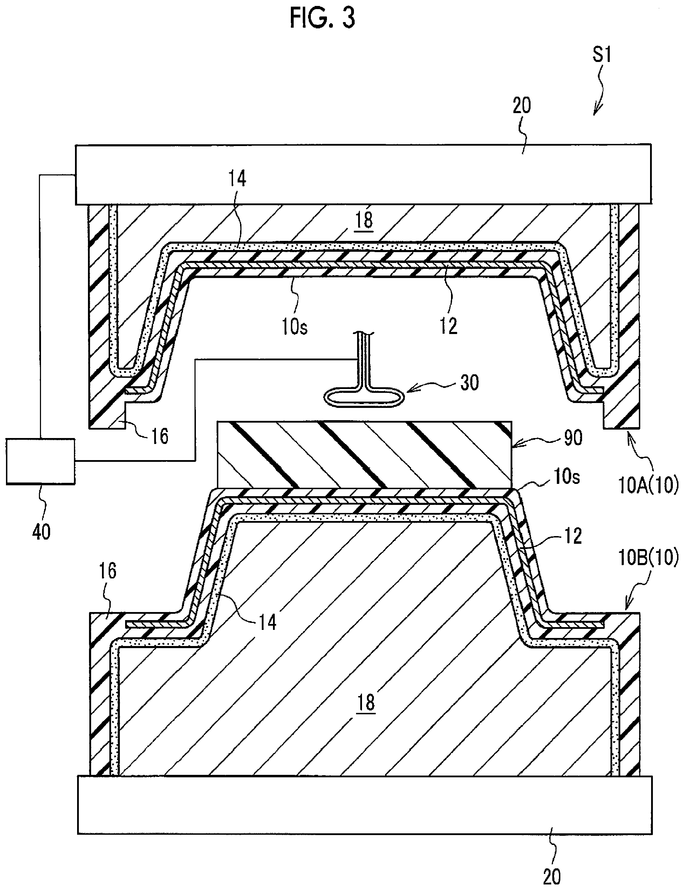

In the molding method of the first embodiment, the die heating step may be performed in a state where the resin substrate 90 is inserted and the resin substrate 90 is disposed on the die 10 (the lower die 10B). Specifically, as shown in FIG. 3, in a state where the resin substrate 90 is disposed on the molding surface 10s of the lower die 10B, the coil 30 is brought close onto the resin substrate 90 and induction-heated. Accordingly, when the resin substrate 90 is a CFRP substrate containing a carbon fiber, the resistance heating element 12 can generate heat to heat the resin substrate 90 through the molding surface 10s and the carbon fiber contained in the resin substrate 90 can generate heat to directly heat the resin substrate 90. In this case, it is not necessary to preheat the resin substrate 90 outside the die 10 (heating in a heating furnace).

The resin substrate 90 may be a substrate not containing a carbon fiber (a substrate not containing a reinforcing fiber or a substrate containing a glass fiber). The resin substrate 90 may be a bulky substrate.

The resin substrate 90 may be a thermosetting resin.

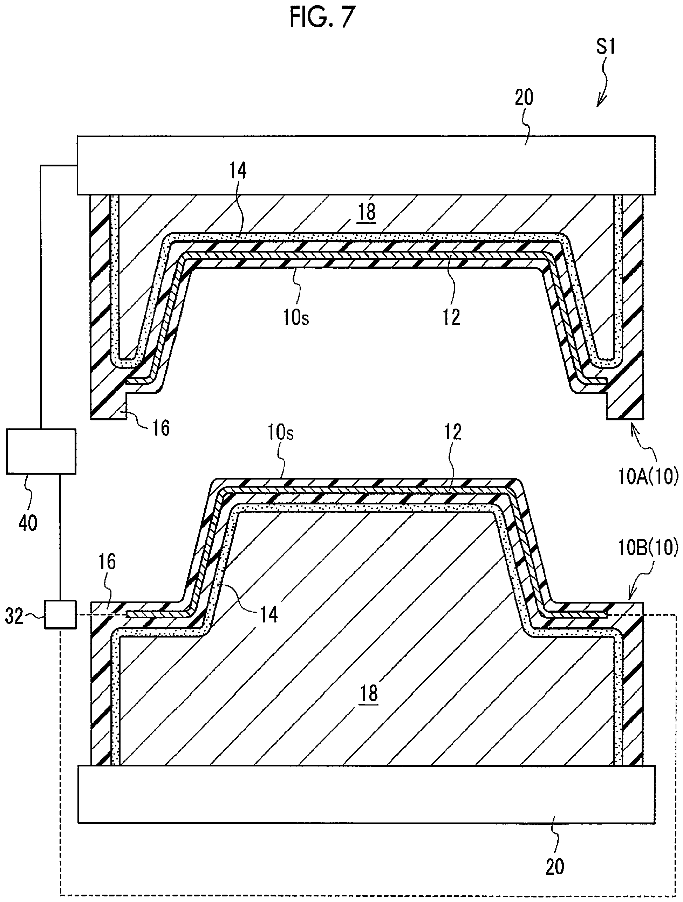

The die heating step may be performed in a state where the die 10 is closed (see FIG. 2B). That is, the die heating step and the pressurizing step may be performed at the same time. It is possible to restrain the resin substrate 90 from lowering the temperature and deteriorating moldability (flowability) by heating the resin substrate in a state where the die 10 is closed. In addition, heating needed for curing the thermosetting resin can be performed. The method is suitable for a molding method in which the flowability of the resin substrate 90 is a problem (for example, a molding method for injecting the resin substrate 90 or a method for using the bulky resin substrate 90, such as a resin transfer molding (RTM) method). As the method for causing the resistance heating element 12 to generate heat in a state where the die 10 is closed, induction heating using the coil 30 may be used, and a method for using a voltage generator 32 directly connected to the resistance heating element 12 (see FIG. 7) may be used. When the directly connected voltage generator is used, there is no problem of the movement control (coil disposition) of the coil 30, which is simple. When the directly connected voltage generator is used, it is desirable that the structure of the resistance heating element 12 is an appropriate structure different from the case where the heating part is the coil 30 (structure different from a mesh shape).

The die heating step may be performed both before the resin substrate 90 is inserted and in a state where the resin substrate 90 has been inserted and disposed on the die 10.

### Second Embodiment

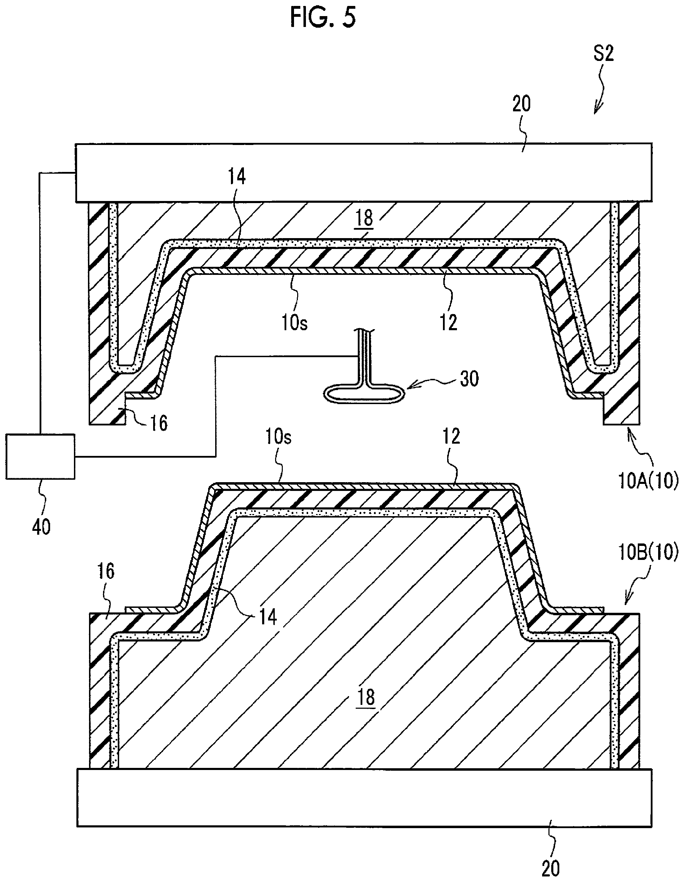

A molding apparatus S2 of a second embodiment will be described with reference to FIG. 5.

As shown in FIG. 5, in a die 10 of the second embodiment, a resistance heating element 12 is not embedded in the die 10, and is exposed on a die surface (molding surface 10s). Therefore, the resistance heating element 12 comes into contact with a resin substrate 90 and a resin body 92. It is possible to apply a pattern corresponding to the shape of the resistance heating element 12 (for example, a mesh pattern) to the resin body 92 by devising the shape of the resistance heating element 12. In addition, it is possible to restrain a trace of the shape of the resistance heating element 12 (for example, a trace of a mesh shape) from remaining on the resin body 92 by making the resistance heating element 12 have a planar shape over the entire area of a molding surface 10s.

The other configurations are the same as those of the first embodiment.

### Third Embodiment

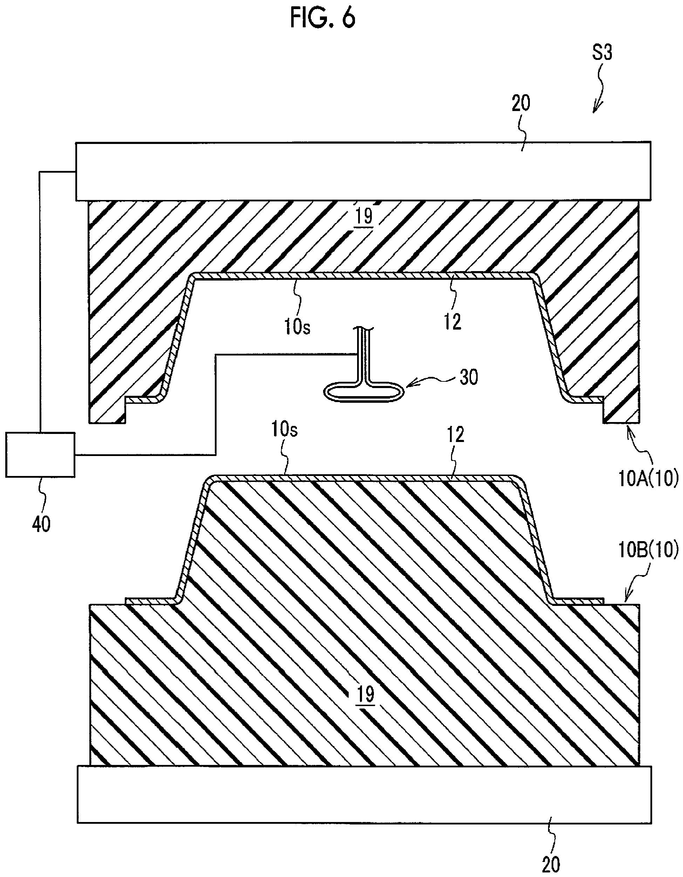

A molding apparatus S3 of a third embodiment will be described with reference to FIG. 6.

As shown in FIG. 6, a die 10 of the third embodiment does not include a die main body made of a metal (see the die main body 18 in FIG. 1) and includes a die main body 19 made of a resin. The resistance heating element 12 is included in the surface of the die main body 19 made of a resin (the surface on a molding surface 10s side). The resistance heating element 12 is exposed on the molding surface 10s. In the die 10 of the third embodiment, the entire die main body 19 made of a resin (or a portion near the molding surface 10s) functions as a "heat insulator" which restrains the heat of the surface portion of the molding die from being transmitted to the inside of the molding die.

The resistance heating element 12 may have a planar shape over the entire area of the molding surface 10s or may have a mesh shape thereover.

### Supplementary Description of Above Embodiments

In the above embodiments, although the example that the upper die 10A and the lower die 10B both include the resistance heating element 12 has been described, only the lower die 10B where the resin substrate 90 is disposed may include the resistance heating element 12. In addition, only the upper die 10A may include the resistance heating element 12.

## Claims

1. A molding die (10) comprising:
a resistance heating element (12) included in a surface portion of the molding die (10) and configured to heat a molding surface (10s) by generating heat, the surface portion of the molding die (10) including the molding surface (10s); and
a heat insulator (14) provided further inside the molding die (10) than the resistance heating element (12) and configured to restrain the heat of the surface portion of the molding die (10) from being transmitted to an inside of the molding die (10).

2. The molding die (10) according to claim 1, wherein the resistance heating element (12) has a mesh shape.

3. The molding die (10) according to claim 1 or 2, wherein the resistance heating element (12) is embedded in the molding die (10).

4. The molding die (10) according to any one of claims 1 to 3, wherein:
the surface portion of the molding die (10) includes a resin layer (16); and
the resistance heating element (12) is embedded in the resin layer (16).

5. The molding die (10) according to claim 4, wherein:
a die main body (18) made of a metal is disposed further inside the molding die (10) than the resin layer (16); and
the heat insulator (14) is a sheet-shaped or plate-shaped heat insulating material interposed between the resin layer (16) and the die main body (18).

6. The molding die (10) according to any one of claims 1 to 5, wherein the resistance heating element (12) is disposed between the molding surface (10s) and the heat insulator (14).

7. The molding die (10) according to claim 1 or 2, wherein the resistance heating element (12) is provided to be exposed on the surface portion of the molding die (10).

8. The molding die (10) according to any one of claims 1 to 7, wherein the heat insulator (14) is disposed along the resistance heating element (12).

9. A molding apparatus comprising:
the molding die (10) according to claim 1; and
a heating part (30, 32) configured to cause the resistance heating element (12) to generate heat by generating an electric current in the resistance heating element (12) to heat the molding surface (10s).

10. The molding apparatus according to claim 9, wherein the heating part is a coil (30) that generates the electric current by electromagnetic induction.

11. The molding apparatus according to claim 9, wherein the heating part is a voltage generator (32) directly connected to the resistance heating element (12).

12. A molding method for molding a resin body (92) from a resin substrate (90) by using the molding die (10) according to claim 1, the molding method comprising:
heating the molding surface (10s) by generating an electric current in the resistance heating element (12); and
pressurizing the resin substrate (90) on the molding surface (10s) by closing the molding die (10).

13. The molding method according to claim 12, wherein:
the resin substrate (90) is a substrate containing a carbon fiber; and
the molding method includes simultaneously heating the molding surface (10s) and the resin substrate by induction heating in a state where the resin substrate (90) is disposed on the molding surface (10s).

14. A manufacturing method for a resin product, the manufacturing method comprising:
molding a resin body (92) from a resin substrate (90) by using the molding die (10) according to claim 1; and
welding the resin body (92) and another resin body by using the same die as the molding die (10).
